Europäisches Patentamt

European Patent Office

Office européen des brevets

(19)

(11) Veröffentlichungsnummer: **0 457 416 A1**

## (12) EUROPÄISCHE PATENTANMELDUNG

(21) Anmeldenummer: 91250127.7

(22) Anmeldetag: 08.05.91

(51) Int. Cl.5: **F03G 7/04**, F24J 3/08

(30) Priorität: 18.05.90 AR 316883
18.05.90 AR 316884
26.09.90 AR 317951

(43) Veröffentlichungstag der Anmeldung:
21.11.91 Patentblatt 91/47

(84) Benannte Vertragsstaaten:
AT CH DE ES FR GB IT LI

(71) Anmelder: **Horten, Diego**
**Tobas 196 C.P., 5153 Costa Azul**
**Villa Carlos Paz, Cordoba(AR)**

(72) Erfinder: **Horten, Diego**
**Tobas 196 C.P., 5153 Costa Azul**
**Villa Carlos Paz, Cordoba(AR)**

(74) Vertreter: **Winkler, Andreas, Dr. et al**
**Forrester & Boehmert Widenmayerstrasse 4/I**
**W-8000 München 22(DE)**

(54) **Vorrichtung zur Nutzbarmachung von geothermischer Energie.**

(57) Vorrichtung zur Nutzbarmachung von geothermischer Energie, bei der ein Förderrohr (3) zum Aufstieg eines darin befindlichen, von der geothermischen Energie erhitzten und ggf. in Dampfform überführten Mediums in die Erdkruste abgeteufst ist, mit einem zweiten, äußeren Rohr (2) zur Zufuhr des Mediums in die Tiefe, welches das Förderrohr umgibt, und einem Abschlußstück (4), welches das äußere Rohr druckdicht gegen das umgebende Gestein oder dgl. abschließt, wobei das Förderrohr in seinem unteren Abschlußbereich mit dem äußeren Rohr in Verbindung steht.

Fig. 1

Die Erfindung betrifft eine Vorrichtung zur Nutzbarmachung von geothermischer Energie, bei der ein Förderrohr zum Aufstieg eines darin befindlichen, von der geothermischen Energie erhitzten und ggf. in Dampfform überführten Mediums in die Erdkruste abgeteuft ist.

Vorrichtungen zur Nutzbarmachung von geothermischer Energie sind bereits seit langem bekannt. Sie arbeiten jedoch häufig mit nicht geschlossenen Systemen, bei denen ein Fluid in heißes Gestein gepumpt und, teilweise an anderer Stelle, nach Erwärmung wieder an die Oberfläche transportiert wird. Dabei wird häufig der durch die Erwärmung entstehende Fluiddruck, am Beispiel von Wasser z. B. auch der Druck des Wasserdampfes, zum Auftrieb benutzt. Ein derartiges Verfahren ist bspw. aus der DE-OS 29 04 140 bekannt, in der ein aus Wasser und einem Keton bestehendes Arbeitsfluid in einen Einfüllschacht eingeleitet wird, und nachdem es eine geothermische Speicherformation passiert hat, in einem Abgabeschacht wiedergewonnen und zu Dampf umgewandelt wird. Ein derartiges Verfahren hat, insbesondere wenn noch ein Keton beigemischt wird, den starken Nachteil, daß nur ein Teil des eingesetzten Arbeitsfluids wieder zurückgewonnen wird, und daß durch den nicht geschlossenen Kreislauf evtl. Verunreinigungen in das wiedergewonnene Arbeitsfluid eingebracht werden können. Dies ist, insbesondere bei der Verwendung von Turbinen, die die Energie des Dampfes in elektrische Energie umwandeln sollen, höchst unerwünscht. Die Verunreinigungen würden zu Ablagerungen und Abnutzungen führen.

Ein weiterer Nachteil solcher offenen Systeme ist es, daß die potentielle Energie, die zum Aufsteigen des Dampfes aufgebracht werden muß, nicht schon beim Herabbringen des Arbeitsfluides entsprechend ausgenutzt wird. Eine derartige Ausnutzung der potentiellen Energie, die insbesondere in Form eines sehr hohen Flüssigkeitsdruckes am unteren Ende einer Fluidsäule in Erscheinung tritt, wird beispielsweise in der DE-OS 29 07 338 genutzt, in der eine sogenannte Tiefschachtfallkraftanlage beschrieben ist. Die dortige Anlage ist jedoch hochkompliziert, beinhaltet einen Verbrennungsmotor, und berücksichtigt nicht, daß eine Erwärmung des Arbeitsfluids bereits durch geothermische Energie (wenn auch in geringerem Maße) möglich ist. Daher ist es bei Kenntnis der dort vorgeschlagenen Vorrichtung nicht möglich, in einfacher Weise geothermische Energie zusammen mit der potentiellen Energie, die beim Abstieg des Mediums frei wird, zu nutzen. Insbesondere hat sich bei einer derartigen Anlage herausgestellt, daß eine Temperaturerhöhung von Wasser auf 150° C ab einer gewissen Tiefe des Schachtes nicht zur Dampferzeugung ausreicht, da ein derartiger Druck herrscht, daß zugeführtes flüssiges Medium bei dieser Temperatur nicht dampfförmig wird.

Es ist daher der Versuch gemacht worden, andere Fluide als Wasser zu verwenden. Dabei ist z.B. in der DE-OS 29 18 001 Frigen 22 (Monochlordifluormethan) mit einem Siedepunkt von ca. -41° C vorgeschlagen worden, das schon bei der in niedrigen Tiefen stattfindenden Erwärmung verdampfen würde. Ein derartiges Arbeitsfluid, das in Großanlagen aufgrund seiner mangelnden Umweltverträglichkeit nicht einsetzbar ist, könnte nach dem umgekehrten Prinzip des Kühlschrankes Verwendung finden. Damit ist jedoch im wesentlichen auch nur ein herkömmlicher Wärmetauscher beschrieben. Die speziellen Probleme und Möglichkeiten, die durch die Nutzung geothermischer Energie in größeren Tiefen auftreten, nämlich Erhöhung des Druckes in einer Flüssigkeitssäule im Vergleich zu dem Druck an der Erdoberfläche und die erhebliche Temperatur in größeren Tiefen der Erdkruste, werden weder von der Anlage gelöst, noch sind sie überhaupt erkannt worden.

Nach dem gleichen Prinzip arbeitet auch das in der DE-OS 30 15 307 beschriebene Verfahren zur Umwandlung von Wärme in mechanische Energie. Nur wird u.a. Propan als Medium vorgeschlagen, was bei großen Anlagen Sicherheitsrisiken in sich birgt.

Es ist auch noch die DE-OS 34 33 057 zu nennen, in der ein Verfahren und eine Einrichtung für die Gewinnung elektrischer oder mechanischer Energie aus heißer geothermischer Sohle nach einem Rankine-Prozeß beschrieben wird. Der dort beschriebene Kreisprozeß für eine Sohle, der dem Carnot-Kreisprozeß für ideale Gase entspricht, setzt jedoch eine komplizierte und störanfällige bzw. wartungsaufwendige Vorrichtung voraus, denn es wird die Sohle erst entspannt und der aus der Sohle entstehende Dampf nachfolgend kondensiert, und dessen Kondensationswärme an das Arbeitsmedium im sekundären Kreislauf zu dessen Filmverdampfung in Nachschaltung zu einer mehrstufigen Erwärmung des flüssigen Arbeitsmediums bis zu seinem Verdampfungspunkt übertragen.

Das dort beschriebene Verfahren berücksichtigt nicht, daß Wasser unter höheren Drücken später siedet, und daß zur Erlangung der kritischen Temperatur, d. h. der Temperatur, an der Wasser unabhängig vom Druck siedet (374° C) eine sehr tiefe Erdbohrung nötig wäre. Eine derartig tiefe Bohrung ist nicht möglich, da die Reißlänge des Stahls, d.h. die Länge eines Stahlrohres, das an sich selber aufgehängt werden kann, bevor der Stahl durch sein eigenes Gewicht reißt, kürzer ist. Ein so beschriebenes Verfahren kann also nur an speziellen Punkten in der Nähe vulkanischer Tätigkeit der Erdkruste oder dgl. benutzt werden.

Zu nennen sind weiter die DE-OS 25 38 344 und die DE-OS 27 49 502 sowie die DE-PS 27 15 499, die jeweils das Wärmepumpenprinzip in verschiedenen Ausführungsformen näher beschreiben, jedoch nicht die potentielle Energie des herabströmenden Fluides nutzen.

Abschließend ist noch die europäische Patentschrift 0 118 788 B1 zu nennen, in der ein Verfahren zur Nutzbarmachung von geothermischer Energie beschrieben wird, in der die Flüssigkeit in einem Dampfförderrohr als filmartige Schicht herabrieselt und durch die Einwirkung der geothermischen Energie verdampft wird, worauf sich in dem Dampfförderrohr ein den atmosphärischen Druck übersteigender Überdruck einstellt, wobei weiter gefordert wird, daß die Flüssigkeit in dem Dampfförderrohr eine spezifische Verdampfungswärme von wenigstens 1000 kJ/m3 gesättigten Dampfes aufweist. Eine derartige Vorrichtung vermag durch das Herabrieseln der Flüssigkeit an der Rohrinnenwand nicht zu verhindern, daß sich Dampf auf dem kalten sich im oberen Teil des Rohres befindlichen herabrieselnden Flüssigkeitsteil niederschlägt und kann die durch die hohe Flüssigkeitssäule entstehenden hohen Drücke in der Flüssigkeit nicht nutzen. Daher muß sie suboptimal bleiben.

Aufgabe der vorliegenden Erfindung ist es daher, geothermische Energie mit geringem technischen Aufwand nutzbar zu machen, insbesondere dabei die potentielle Energie herabströmenden Mediums zu nutzen, und dies mit für die Umwelt ungefährlichen Mitteln und einem geringen Wartungsaufwand zu erreichen.

Erfindungsgemäß wird diese Aufgabe dadurch gelöst, daß ein zweites, äußeres Rohr zur Zufuhr des Mediums in die Tiefe vorgesehen ist, welches das Förderrohr umgibt, und ein Abschlußstück, welches das äußere Rohr druckdicht gegen das umgebende Gestein oder dgl. abschließt wobei das Förderrohr in seinem unteren Abschlußbereich mit dem äußeren Rohr in Verbindung steht.

Durch eine derartige Vorrichtung kann das Medium an der Oberfläche in das äußere Rohr eingeleitet werden, um dann, ggf. in einer Flüssigkeitssäule an den tiefsten Punkt, nämlich den Punkt, in dem das äußere Rohr mit dem Förderrohr verbunden ist, herabgeleitet zu werden. Dabei und insbesondere am unteren Endpunkt wird sich das Medium soweit aufheizen, daß es ggf. sogar in Dampfform übergeht. Das erhitzte Medium oder der Dampf wird anschließend durch das innere Förderrohr an die Oberfläche weitergeleitet. Der dabei entstehende beträchtliche Dampfdruck kann an der Oberfläche genutzt werden, um elektrische Energie zu erzeugen, oder falls man eine geringere Rohrlänge wählt, und kein Dampf entsteht, sondern nur erwärmtes Medium wegen seines geringeren spezifischen Gewichts aufsteigt, kann dieses erwärmte Medium als Heizmedium oder in einem Wärmetauscher verwendet werden.

Weiter wird vorgeschlagen, das Förderrohr mit einer Wärmeisolation, insbesondere einem auf der Innenseite des Förderrohres aufgebrachten Mantel aus Kunststoff-Isoliermaterial zu versehen. Ein derartiger Mantel um das innere Förderrohr hat den Vorteil, daß ein Wärmeaustausch zwischen dem inneren Rohr mit dem sehr heißen Medium und dem äußeren Rohr, in dem das Medium heruntergeleitet wird vermieden wird. Dies ist wichtig, weil insbesondere im oberen Teil der Vorrichtung das erwärmte, sich im Förderrohr befindliche Medium möglichst nicht abgekühlt werden soll. Das im äußeren Rohr befindliche Medium soll ausschließlich durch die geothermische Energie der umgebenden Gesteinsformationen erhitzt werden. Eine derartige Ausbildung, hat den Vorteil, daß sie gewährleistet, daß das innere Förderrohr in das Außenrohr ohne Probleme eingebracht werden kann und die Endbereiche die gewünschte Lage zueinander einnehmen.

Bezüglich der Dimensionierung der Vorrichtung wird vorgeschlagen, daß das äußere Rohr einen Durchmesser von typischerweise 30 cm besitzt, und das Förderrohr einen Durchmesser von typischerweise 15 cm besitzt. Eine derartige Wahl der Dimensionen hat den Vorteil, daß mit herkömmlichen Bohrgerät entsprechende Bohrungen in die Tiefe abgeteuft werden können. Auch sollten die Dimensionen eines Rohres nicht zu groß sein, da ansonsten durch die große Menge des in ihm fließenden Mediums eine merkliche Kühlung des Gesteins hervorgerufen wird, die wegen der geringen Wärmeleitfähigkeit des Gesteins nicht ohne weiteres ausgeglichen wird. Die so gewählten Maße machen es möglich, innerhalb einer Fläche, die einer einzigen Anlage an der Erdoberfläche, beispielsweise einer Turbine zugeordnet ist, mehrere Bohrungen in das Gestein einzubringen. Beispielsweise könnten vier Bohrungen auf einer Fläche von 100 m x 100 m in einer quadratischen Anordnung eingebracht werden.

Weiter wird vorgeschlagen, daß das Förderrohr im unteren Abschlußbereich des äußeren Rohres an diesem oder an einem dieses Rohr verschließenden Teil abgestützt ist. Es ist natürlich denkbar, das Förderrohr nur in das innere Rohr einzuhängen, aber eine derartige Ausbildung besitzt den Vorteil, daß auf diese Art ein einfaches, aber zuverlässiges Zusammenfügen der Abschlußbereiche erreicht werden kann.

Weiter wird vorgeschlagen, daß das Förderrohr in seinem unteren Abschlußbereich Durchlässe aufweist, die eine Verbindung zwischen dem Förderrohr und dem äußeren Rohr herstellen. Eine derartige Ausbildung hat den Vorteil, daß man die Verbindungsfläche zwischen dem äußeren und dem inneren Rohr klein halten kann, so daß nur ein kontrollierter kleiner Teil des Mediums in das innere Rohr eintreten kann. Die genaue Menge, die derart eintreten soll, ist von den Temperaturverhältnissen, sowie den anderen die Dimensionen der Anlage bestimmenden Größen abhängig.

Alternativ dazu können, im unteren Endabschnitt des Förderrohres Trennscheiben zum äußeren Rohr hin vorgesehen sein, die Ventile zum Durchlassen des erhitzten und ggf. dampfförmiges Mediums aufweisen, wodurch ebenfalls eine Kontrolle des an das Förderrohr abgegebenen Mediums möglich ist. Dabei sind bspw. pro Trennscheibe an 4 bis 6 Mühlenventile vorgesehen.

Weiter wird vorgeschlagen, daß das Abschlußstück mit einem senkrechten Rand an seinem äußeren Umfang versehen ist, durch den die Verbindung des Förderrohres mit dem äußeren Rohr und dem Abschlußstück zur Abstützung des unteren Endes des Förderrohres erfolgt, wobei das Förderrohr in seinem unteren Endabschnitt in vier Endabschnitte geteilt ist, die zwischen sich eine größere Querschnittsfläche als die Querschnittsfläche im übrigen Förderrohr umschließen, wobei die Endzonen dieser Endabschnitte in wenigstens einer Vertiefung in dem Abschlußstück ruhen, die zwischen dem senkrechten Rand und einem dem Rand benachbart zur Mitte des Abschlußstückes hin gebildeten erhöhten Bereich des Abschlußstückes gebildet wird.

Die Erfindung schlägt bevorzugt vor, als Medium (Tetrachlorkohlenstoff (CCl$_4$) zu benutzen und das Förderrohr soweit abgeteuft ist, daß CCl$_4$ im Verbindungsbereich zwischen Förderrohr und äußerem Rohr im wesentlichen vollständig verdampft. Damit besitzt man ein Medium, das ein hohes spezifisches Gewicht besitzt, was eine hohe potentielle Energie bewirkt, die ausgenutzt werden kann, das weiter eine niedrige kritische Temperatur besitzt, also eine niedrige Temperatur besitzt, bei der es unabhängig vom Umgebungsdruck dampfförmig wird. Die kritische Temperatur von CCl$_4$ beträgt 283° C, liegt also fast 100° C weniger als bei Wasser. Das spezifische Gewicht liegt 1,6, ist also um 60 % gegenüber Wasser erhöht. Die Siedewärme beträgt 46 kal/kg, während die von Wasser 539 kal/kg ist. Die Siedetemperatur liegt bei 76,7° C. Auch ist CCl$_4$ unbrennbar, es besteht also keine Gefahr einer Explosion bzw. einer plötzlichen Verbrennung, wie sie bei einigen anderen vorgeschlagenen Fluiden durchaus möglich wären.

Dabei wird vorgeschlagen, am oberen Ende des Förderrohres eine Turbinenstation zur Ausnutzung der Druckenergie des Dampfes vorzusehen.

Alternativ wird vorgeschlagen, in dafür geeigneten Regionen bzw. falls eine Warmwasserversorgung gewünscht ist, als Medium Wasser zu verwenden. Wasser besitzt den Vorteil der leichten Verfügbarkeit, und bietet die Möglichkeit, ggf. in einem offenen Kreislauf, ohne Rückführung des bereits einmal geförderten Mediums zu arbeiten.

Dabei ist bevorzugt eine Entnahmestation zur Entnahme des erhitzten Wassers und zum Einbringungen des erhitzten Wassers in eine Warmwasserversorgung vorgesehen. In diesem Fall müßte natürlich kontinuierlich Wasser nachgeliefert werden.

Alternativ wird vorgeschlagen, einen Wärmetauscher am oberen Ende des Förderrohres vorzusehen, der die im erhitzten und ggf. dampfförmigen Medium enthaltende Wärmeenergie nutzt. Ein solcher Wärmetauscher kann sowohl nach als auch vor einer Turbinenstation als auch nach oder vor einer Entnahmestation zur Entnahme des Mediums angeordnet sein. Bevorzugt wird jedoch die Anbringung nach einer Turbine.

Weitere Merkmale und Vorteile der Erfindung ergeben sich aus der nachfolgenden Beschreibung und den beiliegenden Zeichnungen. Dabei zeigt:

Fig. 1   ein bevorzugtes Ausführungsbeispiel der gesamten Vorrichtung unterhalb der Erdoberfläche,

Fig. 2   eine Querschnittsdarstellung der erfindungsgemäßen Vorrichtung; und

Fig. 3   eine Ausschnittsdarstellung des unteren Abschlußbereiches der erfindungsgemäßen Vorrichtung.

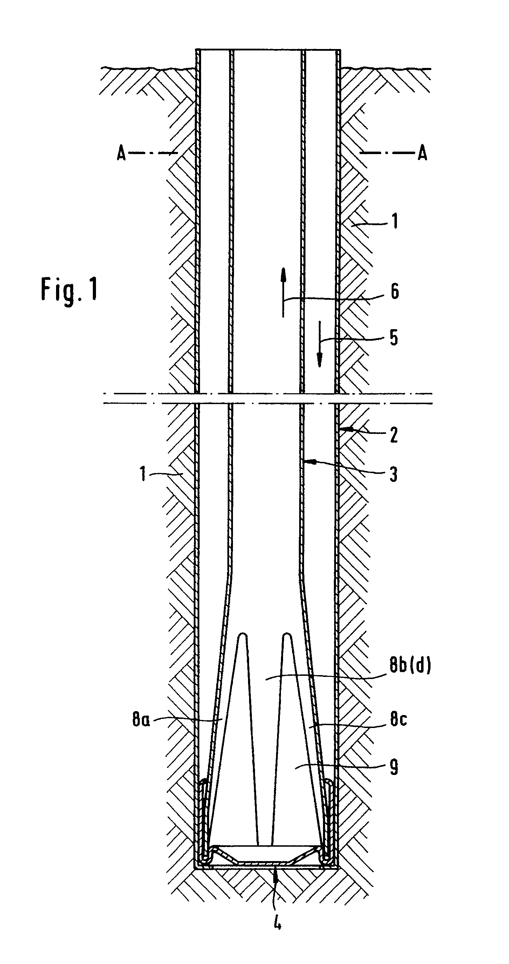

In Fig. 1 ist die Vorrichtung in der umgebenden Erdkruste 1 mit einem äußeren Rohr 2, einem Dampfförderrohr 3, einem Abschlußstück 4 und den Endabschnitten 8a, 8b, 8c und 8d gezeigt, die sich im unteren Abschlußbereich des Förderrohres 3 befinden, um dieses abzustützen. Herabströmendes flüssiges Medium ist durch das Bezugszeichen 5 und aufsteigendes, ggf. dampfförmiges Medium durch das Bezugszeichen 6 bezeichnet.

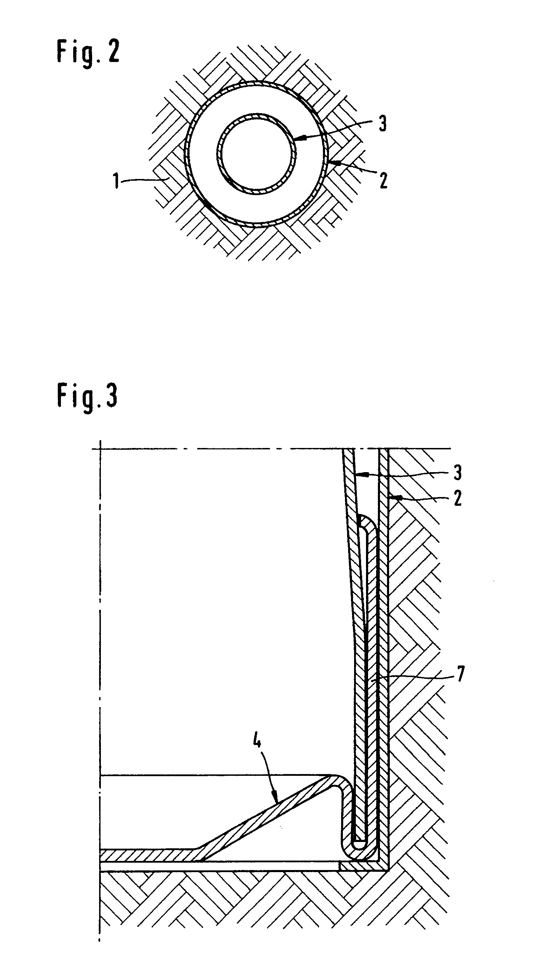

In Fig. 2 ist ein Querschnitt der Vorrichtung entlang der Linie A-A der Fig. 1 gezeigt. Deutlich sind die Größenverhältnisses des Förderrohres 3 bezüglich des äußeren Rohres 2, die vorgeschlagen werden, zu erkennen.

In Fig. 3 schließlich ist in einer Ausschnittsdarstellung aus Fig. 1 die Konstruktion des unteren Abschlußabschnittes der erfindungsgemäßen Vorrichtung dargestellt. Das Abschlußstück 4 besitzt einen senkrechten Rand 7, der sich zwischen den Endabschnitten 8a bis 8d des Förderrohres 3 und dem äußeren Rohr 2 befindet. Weiter ist in dem Abschlußstück 4, dem senkrechten Rand benachbart, zur Mitte des Abschlußstückes 4 hin ein erhöhter Bereich des Abschlußstückes ausgebildet. Diese Ausbildung erleichtert es erheblich, das innere, nachträglich eingebrachte Förderrohr 3 korrekt an Ort und Stelle zu bringen und zu halten.

Die Abdichtung des äußeren Rohres 2 wird durch die spezielle Konstruktion, bei der das Förderrohr 3 in der Tiefe auf das Abschlußstück 4 preßt, begünstigt. So wird das gesamte Gewicht des inneren Förderrohres 3 dazu genutzt, das Abschlußstück 4 fest in das Bohrloch bzw. an das äußere Rohr 2 zu pressen. Dabei kann ein "Bördel" an dem Abschlußstück 4 benutzt werden, der an das äußere Rohr 2 gepreßt wird.

Durch die in der Zeichnung gezeigte Vorrichtung wird es ermöglicht, das Medium bis zu einer kritischen Temperatur aufzuheizen. Bei der kritischen Temperatur existieren Dampf und Flüssigkeit mehr nebeneinander, so daß keine Verdampfungswärme nicht mehr aufgewendet werden muß. Oberhalb der kritischen Temperatur besitzt das vorgeschlagene Medium etwa das halbe spezifische Gewicht von demjenigen des kalten flüssigen Mediums, so daß sich aus dem Unterschied der Gewichte der Flüssigkeitssäulen in dem Förderrohr 3 und dem äußeren Rohr 2 ein Druck ergibt, der das sich im Förderrohr 3 befindliche Medium 6 aufsteigen läßt, so daß aus diesem unter Druck stehende Medium 6 mit einer Turbine elektrische Energie gewonnen werden kann.

Das Einführen des Mediums 5 in das äußere Rohr geschieht mit etwa einer Geschwindigkeit von 70 m/s, woraus sich eine Austrittsgeschwindigkeit des Dampfes entsprechend etwa 200 m/s ergibt.

Bei der Verwendung von $CCl_4$ kann man, wenn man von einer geothermischen Tiefenstufe von 25 m/°C ausgeht, mit einer Bohrtiefe von 7000 m die kritische Temperatur selbst in normaler Erdkruste erreichen. Eine derartige Bohrtiefe ist realistisch erreichbar. Durch das hohe spezifische Gewicht erhält man einen großen Unterschied des Gewichtes der Flüssigkeitssäule und der Dampfsäule pro $cm^2$, so daß der Druck der über die Turbine einem Generator die Leistung zuführt, vergrößert wird.

Weiterhin ist vorteilhaft, daß die Siedewärme bei CC14, die durch eine abschließenden Kondensation freigesetzt werden wird, klein ist, so daß diese verlorengehende Abwärme, falls sie nicht für Heizzwecke genutzt wird, ebenfalls klein ist.

Auch ist die Siedetemperatur des $CCl_4$ von 76,7°C vorteilhaft, denn sie erlaubt es, einen Wärmetauscher mit Wasser zu verwenden, der die Kondensation des Arbeitsmittels sichert, welches bei atmosphärischen Druck in einem Reservoir zur neuerlichen Verwendung zugeführt wird.

Weiter ist $CCl_4$ vorteilhaft, da es die Korrosion nicht fördert und auch nicht brennbar ist.

Bei einer entsprechenden Auslegung der Anlage können Dampfdrücke in einer Größenordnung von ca. 300 atü an der Erdoberfläche (bei ca. 520 atm in 7000 m Tiefe), erreicht werden, die auf jeden Fall für Turbinen ausreichen. Wasser, das in der Kühlanlage für das $CCl_4$ verwendet wird, verläßt diese mit einer Temperatur von ca. 70°C und kann daher zu Heizzwecken in Wohngebieten oder dgl. benutzt werden, falls die Vorrichtung innerhalb einer Stadt aufgebaut ist. Dadurch verringern sich auch Leitungsverluste gegenüber anderen Wärme oder Strom aus Brennstoffen erzeugenden Vorrichtungen bzw. anderen ortsfest bekannten Energieerzeugungsanlagen, die aus Wind oder Wasser Energie erzeugen.

Im Vergleich zu bekannten Energieversorgungsanlagen ist diese vorgeschlagene Vorrichtung äußerst umweltfreundlich, da sie keine fossilen Brennstoffe verbraucht, kein zusätzliches $CO_2$ in die Atmosphäre freisetzt, und nur eine geringe Fläche benötigt.

Im folgenden soll als Beispiel für die Verwendung von Wasser ein Ausführungsbeispiel beschrieben werden. Dabei wird vorzugsweise eine Erdbohrung von 30 cm Durchmesser in einer Tiefe von ca. 4000 m vorgetrieben, und ein 12 Zoll Rohr als äußeres Rohr 2 dazu benutzt, die Seiten der Bohrung abzustützen, wie dies bereits bei Ölbohrungen üblich ist. Ein Förderrohr 3 von etwa 6 Zoll wird innen mit wärmeisolierendem Material versehen.

Die in der vorstehenden Beschreibung sowie in den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

1
umgebendes Gestein
2
äußeres Rohr
3
Förderrohr
4
Abschlußstück
5
absteigendes Medium
6
aufsteigendes Medium
7
Rand (des Abschlußstükes)
8a, 8b, 8c , 8d
Endabschnitte (des Förderrohres)
9
Durchlässe

**Patentansprüche**

1. Vorrichtung zur Nutzbarmachung von geothermischer Energie, bei der ein Förderrohr zum Aufstieg eines darin befindlichen, von der geothermischen Energie erhitzten und ggf. in Dampfform überführten Mediums in die Erdkruste abgeteuft ist, gekennzeichnet durch ein zweites, äußeres Rohr (2) zur Zufuhr des Mediums in die Tiefe, welches das Förderrohr (3) umgibt, und ein Abschlußstück (4), welches das äußere Rohr druckdicht gegen das umgebende Gestein (1) oder dgl. abschließt, wobei das Förderrohr (3) in seinem unteren Abschlußbereich mit dem äußeren Rohr (2) in Verbindung steht.

2. Vorrichtung nach Anspruch 1, dadurch gekennzeichnet, daß das Förderrohr (3) mit einer Wärmeisolation versehen ist.

3. Vorrichtung nach Anspruch 2, dadurch gekennzeichnet, daß die Wärmeisolation einen auf der Innenseite des Förderrohres (3) aufgebrachten Mantel aus Kunststoff-Isoliermaterial umfaßt.

4. Vorrichtung nach einem der vorangehenden Ansprüche, dadurch gekennzeichnet, daß das äußere Rohr (2) einen Durchmesser von etwa 30 cm, und das Förderrohr (3) einen Durchmesser von etwa 15 cm besitzt.

5. Vorrichtung nach einem der vorangehenden Ansprüche, dadurch gekennzeichnet, daß das Förderrohr (3) im unteren Abschlußbereich des äußeren Rohrs (2) an diesem oder an einem dieses Rohr verschließenden Teil abgestützt ist.

6. Vorrichtung nach einem der vorangehenden Ansprüche, dadurch gekennzeichnet, daß das Förderrohr (3) in seinem unteren Abschlußbereich Durchlässe (9) aufweist, die eine Verbindung zwischen Förderrohr (3) und äußerem Rohr (2) herstellen.

7. Vorrichtung nach einem der Ansprüche 1 bis 5, dadurch gekennzeichnet, daß im unteren Endabschnitt des Förderrohres (3) Trennscheiben zum äußeren Rohr (2) hin vorgesehen sind, die Ventile zum Durchlassen des erhitzten und ggf. dampfförmigen Mediums aufweisen.

8. Vorrichtung nach einem der vorangehenden Ansprüche, dadurch gekennzeichnet, daß das Abschlußstück (4) mit einem senkrechten Rand (7) an seinem äußeren Umfang versehen ist, durch den die Verbindung des Förderrohres (3) mit dem äußeren Rohr (2) und dem Abschlußstück (4) zur Abstützung des unteren Endes des Förderrohres (3) erfolgt, wobei das Förderrohr (3) in seinem unteren Abschlußbereich in mindestens vier Endabschnitte (8a, 8b, 8c und 8d) geteilt ist, die zwischen sich eine größere Querschnittsfläche als die Querschnittsfläche im übrigen Förderrohr (3) umschließen, wobei die Endzonen dieser Endabschnitte (8a, 8b, 8c, 8d) in wenigstens einer Vertiefung in dem Abschlußstück (4) ruhen, die zwischen dem senkrechten Rand (7) und einem dem Rand benachbart zur Mitte des Abschlußstückes (4) hin gebildeten erhöhten Bereich des Abschlußstückes (4) ausgebildet ist.

9. Vorrichtung nach einem der vorangehende Ansprüche, dadurch gekennzeichnet, daß das Medium Tetrachlorkohlenstoff ($CCl_4$) ist und das Förderrohr (3) so weit abgeteuft ist, daß $CCl_4$ im Verbindungsbereich zwischen Förderrohr (3) und äußerem Rohr (2) im wesentlichen vollständig verdampft.

10. Vorrichtung nach Anspruch 9, gekennzeichnet durch eine Turbinenstation zur Ausnutzung der Druckenergie des Dampfes am oberen Ende des Förderrohres (3).

11. Vorrichtung nach einem der Ansprüche 1 bis 8, dadurch gekennzeichnet, daß das Medium Wasser ist.

12. Vorrichtung nach Anspruch 11 zur Entnahme des erhitzten Wassers und zum Einbringen des erhitzten Wassers in eine Warmwasserversorgung, am oberen Ende des Förderrohres (3).

13. Vorrichtung nach einem der vorangehenden Ansprüche, dadurch gekennzeichnet, daß am oberen Ende des Förderrohres (3) ein Wärmetauscher vorgesehen ist, der die in dem Medium enthaltene Wärmeenergie nutzt.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | FR-A-2 323 897 (POUVREAU)<br>* Seite 1, Zeilen 1 - 16; Figuren 1-3 * * Seite 3, Zeilen 1 - 22 @ Seite 4, Zeilen 5 - 10 @ Seite 5, Zeilen 7 - 12 @ Seite 10, Zeile 23 - Seite 11, Zeile 19 *<br>— — — | 1-3,11,5, 6,10 | F 03 G 7/04<br>F 24 J 3/08 |
| Y | EP-A-0 017 783 (AEROAQUA)<br>* Seite 7, Zeile 20 - Seite 8, Zeile 14; Figur 1 * * Seite 12, Zeilen 8 - 14 *<br>— — — | 5,6 | |
| X | DE-A-2 927 222 (BENENS)<br>* Figuren 1, 2 *<br>— — — | 1-3,11-13 | |
| X | DE-A-2 358 019 (FLEMMING)<br>* das ganze Dokument *<br>— — — | 1,11-13 | |
| X | US-A-4 912 941 (BUCHI)<br>* Spalte 2, Zeilen 23 - 56; Figur 4 * * Spalte 4, Zeilen 35 - 66 *<br>— — — | 1-3,11,12 | |
| X | EP-A-0 045 993 (WAVIN)<br>* Seite 2, Zeile 17 - Seite 3, Zeile 3; Figur 3 * * Seite 4, Zeilen 1 - 9 *<br>— — — | 1-3 | |
| X,A | DE-A-3 029 753 (STRATHE)<br>* das ganze Dokument *<br>— — — | 1-3,4 | **RECHERCHIERTE SACHGEBIETE (Int. Cl.5)**<br><br>F 03 G<br>F 24 J |
| A | DE-A-2 458 457 (CAPELLO)<br>* Seite 5, Zeile 24 - Seite 6, Zeile 20; Figur 3 *<br>— — — — — | 7 | |

Der vorliegende Recherchenbericht wurde für alle Patentansprüche erstellt

| Recherchenort | Abschlußdatum der Recherche | Prüfer |
|---|---|---|
| Den Haag | 19 August 91 | JORIS J.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------------
& : Mitglied der gleichen Patentfamilie, übereinstimmendes Dokument